# EUROPEAN PATENT SPECIFICATION

(11) **EP 3 221 069 B1**
(45) Date of publication and mention of the grant of the patent: **17.07.2019**
(21) Application number: 15823192.8
(22) Date of filing: 05.11.2015
(51) Int. Cl.: B21J 15/14, B23Q 17/00

(54) **DEVICE AND METHOD FOR MECHANICAL WORKING**
VORRICHTUNG UND VERFAHREN ZUR MECHANISCHEN BEARBEITUNG
DISPOSITIF ET PROCÉDÉ PERMETTANT UN TRAVAIL MÉCANIQUE

(30) Priority: 17.11.2014 IT TO20140950
(43) Date of publication of application: 27.09.2017
(73) Proprietor: Bisiach & Carrù S.p.A., 10078 Venaria Reale (TO) (IT)
(72) Inventor: BISIACH, Bruno, I-10078 Venaria (TO) (IT)
(74) Representative: Robba, Pierpaolo
(86) International application number: PCT/IB2015/058548
(87) International publication number: WO 2016/079628

(56) References cited:
- EP-A2- 1 884 313
- WO-A1-2008/068595
- FR-A1- 2 532 205
- US-A- 5 037 020

## Description

### Technical Field

The present invention relates to a device for and a method of mechanical working, and more specifically it concerns a working head for industrial robots.

Preferably, but not exclusively, the invention is applied in drilling heads for industrial robots, and the following description mainly refers to such an application.

### Prior Art

In the field of working heads for industrial robots, it is known to use drilling heads in order to drill superimposed panels and structures made of different materials, for instance aluminium, titanium alloys and carbon fibres, which are then joined for instance by riveting.

While being drilled, the superimposed panels and structures are to be kept firmly pressed against each other as a stack, so as to prevent the panels and structures from becoming spaced apart, thereby creating hollow spaces therebetween where drilling chips could penetrate or burrs could form at the bore edges.

An example of such devices is disclosed in patent application EP 1884313 in the name of the Applicant, which application discloses a working plant for drilling a structure consisting of reinforcing ribs applied onto panels.

The plant includes an internal working head and an external working head, the latter being equipped with a load detector arranged to measure the thrust applied to the structure to be drilled. The external working head is drawn close to the external face of the wall of the structure until it applies onto said external face a thrust equal to a predetermined approaching thrust threshold. The internal working head is then drawn close to the internal face of the wall of the structure until the load detector detects a predetermined variation of the thrust applied to the external structure wall by the external working head. Eventually, a thrust equal to the compression force required for drilling is applied to the external face of the structure by the external working head. The external and internal working heads keep the panels and the reinforcing ribs pressed together, thereby allowing drilling thereof while providing a load detector on a single drilling head.

Yet, the devices of the kind specified above suffer from some drawbacks.

A drawback is that the provision of two working heads does not allow working pieces having a face that is difficult to be accessed, due to encumbrances or to the shape of the superimposed panels and structures to be worked or machined.

Another drawback is that such a device requires the provision of two working heads, with the resultant costs.

A working head, with a pneumatic cylinder connected to both a working slide and a counter arm, with a set of guides ensuring the alignment of the slide and the arm, thereby allowing for positional tolerances of the parts to be drilled and an arrangement of Belleville springs which sets a defined clamping pressure during drilling, is disclosed in FR 2 532 205. This document however does not provide for a solution to the problem of how to balance the variation of forces applied to the spindle of the drilling head.

### Synthesis of the invention

It is an object of the present invention to provide a working head for industrial robots, which is of reduced size and which preferably is suitable for being used in order to drill superimposed panels and structures at areas difficult to be accessed.

It is another object of the present invention to provide a working head for industrial robots, which is suitable for being used in order to drill superimposed panels and structures and which is simple and cheap.

The above and other objects are achieved by the present invention by providing a working head for industrial robots in accordance with the appended claims.

It is to be understood that the appended claims are integral part of the technical teaching provided herein in the present description in respect of the invention.

### Brief Description of the Figures

Further features and advantages of the present invention will become apparent from the following detailed description, given only by way of non limiting example with reference to the accompanying drawings, in which:

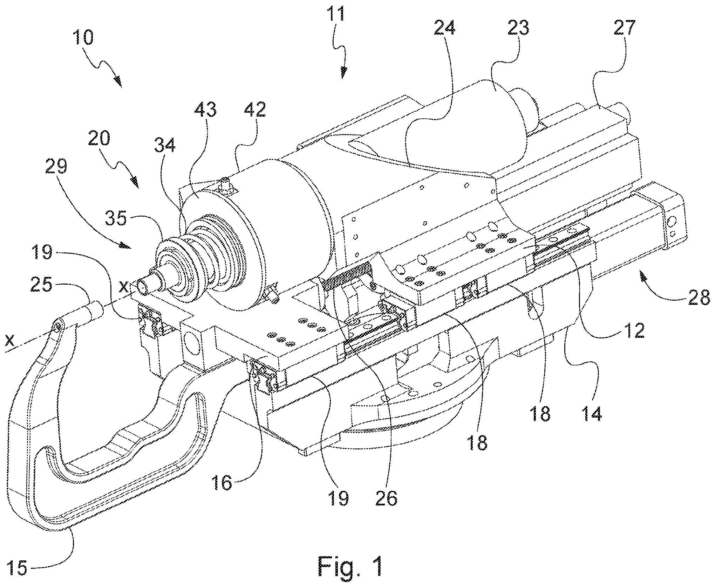

- Fig. 1 is a perspective view of an embodiment of a working head according to the present invention; and
- Fig. 2 is a sectional view of an embodiment of a working head according to the present invention.

### Description of a Preferred Embodiment

Referring to the Figures, there is shown an exemplary embodiment of a working head for industrial robots, e.g. a drilling head 10 according to an embodiment of the present invention, to which reference will be made hereinafter.

Drilling head 10, also referred to as working head 10 in the present description, includes: a spindle 11, for instance an electrically operated spindle, which is slidably mounted on a head support 14; a worm screw 26, connected to spindle 11 and arranged to move it in a feed direction X - X; and a counter arm 15, connected to worm screw 26 and slidably mounted on head support 14.

Preferably, drilling head 10 includes a spindle 11 connected to a working slide 12, a counter arm 15 connected to a counter slide 16 and a head support 14 which can be for instance connected to a robot arm.

Working slide 12 and counter slide 16 are slidably mounted on head support 14, for instance on drilling guides 18 and counter guides 19, respectively. Preferably, working slide 12 and counter slide 16 are slidable in a feed direction, parallel to the spindle axis and, in the exemplary case of the drilling head, parallel to drilling axis X - X.

Preferably, spindle 11 is fastened, for instance screwed, onto working slide 12, and counter arm 15 is fastened, for instance screwed, onto counter slide 16.

In known manner, spindle 11 in turn includes a tool 20, for instance a drilling tool with a drilling bit 21, a tool carrier 22 and a spindle motor 23.

Preferably, spindle 11 is connected to a spindle support 24, which is in turn connected to working slide 12.

More preferably, spindle 11 is fastened, for instance screwed, onto spindle support 24, and spindle support 24 is fastened, for instance screwed, onto working slide 12.

In a preferred manner, counter arm 15 includes a bored counter bushing 25, which is located on drilling axis X - X so that tool 20, for instance drilling bit 21, can pass through the bushing.

Preferably, counter bushing 25 is connected to one end of counter arm 15.

Spindle 11 and counter arm 15, and working slide 12 and counter slide 16, are moved by worm screw 26, e.g. a ball screw, which is connected to counter slide 16 through a nut 38 and to working slide 12 through a screw support 39. Screw 26 is connected to a slide motor 27 and is made to rotate by said slide motor 27, which in turn is connected to working slide 12 so as to be movable integrally with spindle 11.

Slide motor 27 is fastened, for instance screwed, onto working slide 12.

As it will be explained in detail below, ball screw 26 coupled with nut 38 and support 39 is arranged to cause spindle 11 and counter arm 15, and preferably working slide 12 and counter slide 16, to move in the feed direction and in mutually opposite senses. When screw 26 is made to rotate, nut 38 and support 39 cause working slide 12 and counter slide 16 to move in opposite directions, so as to compress the stack of superimposed panels and structures to be machined between counter arm 15 and tool 20, as it will be disclosed in detail below.

Working head 10 includes a balancing cylinder 28 connected to spindle 11 and head support 14, and arranged to balance, under the control of a controller, the variation of forces applied to the spindle as its spatial position varies.

Balancing cylinder 28 is arranged to exert a predetermined force, or threshold force, onto spindle 11, or preferably onto working slide 12 connected to spindle 11, so that the spindle moves when a force exceeding said predetermined force is applied to it.

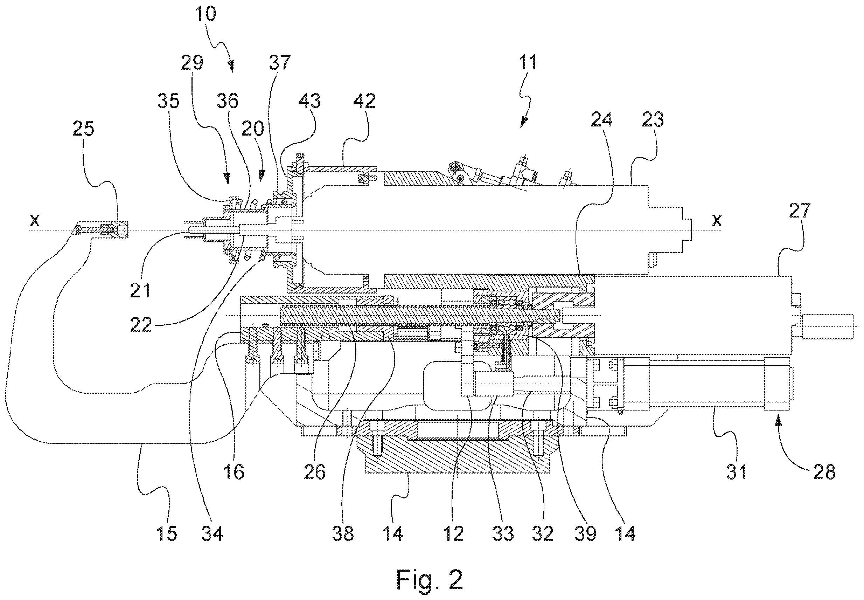

For instance, balancing cylinder 28 is a pneumatic balancing cylinder, shown in Fig. 2, and it includes a body 31, connected to head support 14, and a stem 32 movable within body 31 and having one end 33 connected to working slide 12.

Preferably, said predetermined force can be controlled by an electronic controller and it is made to vary in known manner by acting onto the pneumatic balancing cylinder.

Preferably body 31 is fastened, for instance screwed, onto head support 14, and end 33 of stem 32 is fastened to working slide 12, for instance, threaded stem end 33 is screwed onto working slide 12.

Preferably, tool 20 includes a bushing 29 arranged to internally accommodate drilling bit 21 and provided with an opening through which the bit can come out. Preferably, tool 20 includes a sleeve 42 arranged to internally receive the forward end of spindle motor 23 and provided with a cover 43. The working device further includes, in known manner, a fluidic circuit arranged to generate a fluid flow inside bit 21, and a suction circuit formed inside sleeve 42 and performing suction around the bit during working, in order to remove chips, swarfs or materials emitted in the area where the tool is working.

In known manner, bushing 29 includes for instance a first tubular segment 36 and a second tubular segment 37 connected together so as to form a telescopic sleeve able to reversibly extend and collapse. The second tubular segment 37 is connected, for instance welded, to cover 43. A spring 34, for instance a helical spring, by pushing at one end against cover 43 and at the other end against a plate 35 connected to the first tubular segment 36, tends to completely extend the telescopic sleeve.

Preferably, plate 35 and cover 43 include seats where the ends of spring 34 are received. Bushing 29, when completely extended, is arranged so that it wholly encloses the drilling bit, whereas, when compressed, it allows the bit to project out, thereby permitting working.

Preferably, the first tubular segment 36 is formed of three tubular segments with different diameters.

The operation of working head 10 according to the invention is as follows.

In a first step, working head 10 is positioned so that the superimposed panels and/or structures to be machined are located between counter arm 15 and tool 20, preferably between counter bushing 25 and tool 20.

In a second step, slide motor 27 puts worm screw 26, preferably the ball screw, into rotation, thereby causing counter arm 15 connected thereto, and preferably counter slide 16 connected to counter arm 15 and to worm screw 26, to move. Preferably, balancing cylinder 28, being calibrated with such a force as to oppose the movement of working slide 12 connected thereto, acts so that, when ball screw 26 is made to rotate, counter slide 16 moves, whereas tool 20 and working slide 12 remain stationary.

In a third step, counter arm 15 arrives in contact with the stacked panels and/or structures, thereby exerting a compression force thereon.

In a fourth step, the movement of tool 20, preferably of working slide 12 connected thereto, which had remained stationary in the second step, begins, said movement continuing as long as tool 20, and preferably bushing 29 thereof, arrives in contact with the panels and/or structures. That fourth step starts when the compression force exerted onto the stacked panels and/or structures during the third step exceeds the force required to cause spindle 11, preferably working slide 12 connected thereto, to move.

In a fifth step, the thrust applied to the stack continues until tool 20 begins the machining, for instance until the thrust exceeds the threshold required to cause return of the first tubular segment 36, by overcoming the thrust exerted by spring 34, thereby allowing the machining to begin.

Advantageously, working head 10 according to the present invention allows obtaining a working head for industrial robots that has a reduced size and that is suitable for use in order to drill superimposed panels and structures at areas difficult to be accessed. Actually, the provision of the counter arm allows having a reduced size with respect to the prior art working heads, which require the provision of two opposed heads. Moreover, working head 10 according to the invention has the advantage of having a simple and cheap mechanism for keeping the panels and the structures pressed and stacked during machining.

Of course, the embodiments and the construction details can be widely changed with respect to what has been described and shown by way of non limiting example only, without thereby departing from the scope of the present invention as defined in the appended claims.

## Claims

1. Working head (10) for industrial robots, comprising:
- a spindle (11) comprising a tool (20), said spindle (11) being connected to a working slide (12) slidably mounted on a head support (14);
- a worm screw (26) connected to the working slide (12) and arranged to make it move in a feed direction (X-X);
- a counter arm (15) connected to a counter slide (16) connected to the worm screw (26) and slidably mounted on the head support (14), said counter arm (15) being arranged to be moved by said worm screw (26) in the feed direction (X-X) and in a sense opposite to that of the movement of the spindle (11), in order to compress a stack of superimposed panels and/or structures to be machined between the counter arm (15) and the tool (20),
the working head further comprising a slide motor (27) fastened to the working slide (12) and connected to the worm screw (26) in order to move the working slide (12) and the counter slide (16), and a balancing cylinder (28) connected to the spindle (11) and to the head support (14) in order to balance the variation of forces applied to the spindle as its spatial position varies.

2. Working head (10) according to claim 1, wherein the balancing cylinder (28) is arranged to exert a predetermined force onto the spindle (11), so that the spindle moves when a force higher than said predetermined force is exerted onto it.

3. Working head (10) according to claim 1 or 2, wherein the balancing cylinder (28) is a pneumatic balancing cylinder and comprises a body (31) connected to the head support (14), and a stem (32) movable within the body (31) and having one end (33) connected to the working slide (12), which is in turn connected to the spindle (11).

4. Working head (10) according to claim 2 or 3, wherein said predetermined force is controlled by an electronic controller.

5. Working head (10) according to any of the preceding claims, wherein the tool (20) is a drilling tool comprising a drilling bit (21).

6. Working head (10) according to claim 5, wherein the counter arm (15) comprises a bored counter bushing (25) located along the drilling axis (X-X) and arranged to be passed through by the drilling bit (21).

7. Working head (10) according to any one of the preceding claims, wherein the tool (20) comprises a bushing (29) arranged to internally accommodate the drilling bit (21) and provided with an opening through which the bit can come out, said bushing (29) further comprising a first tubular segment (36) and a second tubular segment (37) connected together so as to form a telescopic sleeve capable of reversibly extending and collapsing.

8. Method of machining superimposed panels and/or structures, comprising the following steps:
- providing a working head (10) according to any one of the preceding claims;
- placing the working head (10) so that the superimposed panels and/or structures to be machined are located between the counter arm (15) and the tool (20);
- putting the worm screw (26) in rotation, thereby moving the counter arm (15) connected thereto until it arrives into contact with the superimposed panels and/or structures, while the tool (20) is kept stationary;
- exerting a compression force onto the superimposed panel and/or structures by means of the counter arm (15), thereby applying a compression force thereto;
- moving the tool (20) until it arrives into contact with the panels and/or the structures;
- maintaining the thrust exerted onto the stack of panels and/or structures until the tool (20) starts working.

## Patentansprüche

1. Tête de travail (10) pour des robots industriels, comprenant :
- une broche (11) comprenant un outil (20), ladite broche (11) etant raccordee à un coulisseau de travail (12) monte coulissant sur un support de tête (14) ;
- une vis sans fin (26) raccordee au coulisseau de travail (12) et agencee pour l'amener à se deplacer dans une direction d'alimentation (X-X) ;
- un contre-bras (15) raccorde à un contre-coulisseau (16) raccorde à la vis sans fin (26) et monte coulissant sur le support de tête (14), ledit contre-bras (15) etant agence pour être deplace par ladite vis sans fin (26) dans la direction d'alimentation (X-X) et dans un sens oppose à celui du deplacement de la broche (11), afin de comprimer une pile de panneaux et/ou de structures superpose(e)s à usiner entre le contre-bras (15) et l'outil (20),
la tête de travail comprenant en outre un moteur de coulisseau (27) fixe au coulisseau de travail (12) et raccorde à la vis sans fin (26) afin de deplacer le coulisseau de travail (12) et le contre-coulisseau (16), et un verin d'équilibrage (28) raccorde à la broche (11) et au support de tête (14) afin d'équilibrer la variation de forces appliquees à la broche à mesure que sa position spatiale varie.

2. Tête de travail (10) selon la revendication 1, dans laquelle le verin d'equilibrage (28) est agence pour exercer une force predeterminee sur la broche (11), de sorte que la broche se deplace lorsqu'une force superieure à ladite force predeterminee est exercee sur elle.

3. Tête de travail (10) selon la revendication 1 ou 2, dans laquelle le verin d'équilibrage (28) est un verin d'équilibrage pneumatique et comprend un corps (31) raccorde au support de tête (14), et une tige (32) mobile au sein du corps (31) et ayant une extremite (33) raccordee au coulisseau de travail (12), qui est quant à lui raccorde à la broche (11).

4. Tête de travail (10) selon la revendication 2 ou 3, dans laquelle ladite force predeterminee est commandee par un dispositif de commande electronique.

5. Tête de travail (10) selon l'une quelconque des revendications precedentes, dans laquelle l'outil (20) est un outil de forage comprenant un foret (21).

6. Tête de travail (10) selon la revendication 5, dans laquelle le contre-bras (15) comprend une contre-douille alésée (25) situee selon l'axe de forage (X-X) et agencee pour être traversee par le foret (21).

7. Tête de travail (10) selon l'une quelconque des revendications precedentes, dans laquelle l'outil (20) comprend une douille (29) agencee pour loger à l'interieur le foret (21) et pourvue d'une ouverture à travers laquelle le foret peut sortir, ladite douille (29) comprenant en outre un premier segment tubulaire (36) et un second segment tubulaire (37) raccordes ensemble de façon à former un manchon telescopique capable de s'étendre et se rabattre de façon reversible.

8. Procede d'usinage de panneaux et/ou de structures superpose(e)s, comprenant les etapes suivantes :
- la fourniture d'une tête de travail (10) selon l'une quelconque des revendications precedentes ;
- le placement de la tête de travail (10) de sorte que les panneaux et/ou structures superpose(e)s à usiner soient situes entre le contre-bras (15) et l'outil (20) ;
- la mise en rotation de la vis sans fin (26), déplaçant ainsi le contre-bras (15) raccorde à celle-ci jusqu'à ce qu'il arrive en contact avec les panneaux et/ou structures superposé(e)s, tandis que l'outil (20) est maintenu immobile ;
- le fait d'exercer une force de compression sur les panneaux et/ou structures superpose(e)s au moyen du contre-bras (15), appliquant ainsi une force de compression à ceux-ci ;
- le deplacement de l'outil (20) jusqu'à ce qu'il arrive en contact avec les panneaux et/ou les structures ;
- le maintien de la poussee exercee sur la pile de panneaux et/ou de structures jusqu'à ce que l'outil (20) commence à travailler.

## Revendications

1. Arbeitskopf (10) für Industrieroboter, mit:
- einer Spindel (11), die ein Werkzeug (20) aufweist, wobei die Spindel (11) an einen Arbeitsschlitten (12) angeschlossen ist, der gleitend auf einem Kopfträger (14) montiert ist,
- einer Madenschraube (26), die mit dem Arbeitsschlitten (12) verbunden ist und dafür vorgesehen, diesen in einer Vorschubrichtung (X-X) in Bewegung zu versetzen,
- einem Gegenarm (15), der mit einem Gegenschlitten (16) verbunden ist, der mit der Madenschraube (26) verbunden ist und gleitend beweglich an dem Kopfträger (14) montiert ist, wobei der Gegenarm (15) dafür vorgesehen ist, durch die Madenschraube (26) in der Vorschubrichtung (X-X) und in einer Weise, die der Bewegung der Spindel (11) gegenüberliegt, in Bewegung versetzt zu werden, um einen Stapel von übereinanderliegenden Paneelen und/oder zu bearbeitenden Strukturen zwischen dem Gegenarm (15) und dem Werkzeug (20) zusammen zu drücken,
wobei der Arbeitskopf zudem einen Gleitmotor (27), der an dem Arbeitsschlitten (12) befestigt und mit der Madenschraube (26) verbunden ist, um den Arbeitsschlitten (12) und den Gegenschlitten (16) zu bewegen, und einen Ausgleichszylinder (28) aufweist, der mit der Spindel (11) und dem Kopfträger (24) verbunden ist, um Variationen von auf die Spindel einwirkenden Kräften, während diese ihre räumliche Position ändert, auszugleichen.

2. Arbeitskopf (10) nach Anspruch 1, wobei der Ausgleichszylinder (28) dafür vorgesehen ist, eine vorgegebene Kraft auf die Spindel (11) auszuüben, so dass sich die Spindel bewegt, wenn eine Kraft auf sie ausgeübt wird, die größer als die vorgegebene Kraft ist.

3. Arbeitskopf (10) nach Anspruch 1 oder 2, wobei der Ausgleichszylinder (28) ein pneumatischer Ausgleichszylinder ist und einen Körper (31), der mit dem Kopfträger (14) verbunden ist, sowie einen Stiel (32) aufweist, der in dem Körper (31) beweglich ist und ein Ende (33) aufweist, das mit dem Arbeitsschlitten (12) verbunden ist, der wiederum mit der Spindel (11) verbunden ist.

4. Arbeitskopf (10) nach Anspruch 2 oder 3, wobei die vorgegebene Kraft von einem elektronischen Steuergerät gesteuert wird.

5. Arbeitskopf (10) nach einem der vorstehenden Ansprüche, wobei das Werkzeug (20) ein Bohrwerkzeug ist, das eine Bohrkrone (21) aufweist.

6. Arbeitskopf (10) nach Anspruch 5, wobei der Gegenarm (15) eine gebohrte Gegenbuchse (25) aufweist, die entlang der Bohrachse (X-X) angeordnet und dafür vorgesehen ist, von der Bohrkrone (21) durchsetzt zu werden.

7. Arbeitskopf (10) nach einem der vorstehenden Ansprüche, wobei das Werkzeug (20) eine Buchse (29) aufweist, die dafür vorgesehen ist, intern die Bohrkrone (21) aufzunehmen, und mit einer Öffnung versehen ist, durch welche die Krone herauskommen kann, wobei die Buchse (29) zudem einen ersten Rohrabschnitt (36) und einen zweiten Rohrabschnitt (37) aufweist, die miteinander verbunden sind, um eine Teleskophülse zu bilden, die dazu in der Lage ist, sich reversibel auszufahren und einzufahren.

8. Verfahren zum Bearbeiten von übereinanderliegenden Paneelen und/oder Strukturen, mit den folgenden Schritten:
- Bereitstellen eines Arbeitskopfes (10) nach einem der vorstehenden Ansprüche,
- Anordnen des Arbeitskopfes (10), so dass die übereinanderliegenden Paneele und/oder Strukturen, die zu bearbeiten sind, zwischen dem Gegenarm (15) und dem Werkzeug (20) angeordnet sind,
- in Drehung versetzen einer Madenschraube (26), wodurch der Gegenarm (15), der mit ihr verbunden ist, bewegt wird, bis er mit den übereinanderliegenden Paneelen und/oder Strukturen in Kontakt kommt, während das Werkzeug (20) unbewegt bleibt,
- Ausüben einer Presskraft auf die übereinanderliegenden Paneele und/oder Strukturen mittels des Gegenarms (15), wodurch eine Druckkraft darauf ausgeübt wird,
- Bewegen des Werkzeugs (20), bis es mit den Paneelen und/oder den Strukturen in Kontakt kommt,
- Aufrechterhalten des auf den Stapel aus Paneelen und/oder Strukturen ausgeübten Drucks, bis das Werkzeug (20) zu arbeiten beginnt.
